# FASCICULE DE BREVET EUROPEEN

(11) **EP 0 627 447 B1**
(45) Date de publication et mention de la délivrance du brevet: **07.04.1999**
(21) Numéro de dépôt: 94201398.8
(22) Date de dépôt: 18.05.1994
(51) Int. Cl.: C08F 4/02

(54) **Support de catalyseur et catalyseur de polymérisation des alpha-oléfines; procédés pour leur obtention et polymérisation des alpha-oléfines en présence du catalyseur**
Katalysatorträger und Katalysator für Alpha-Olefinpolymerisation; Verfahren zu ihrer Herstellung und Polymerisation von Alpha-Olefinen in Gegenwart des Katalysators
Catalyst support and catalyst for alpha-olefin polymerization; processes for preparing them and polymerization of alpha-olefins in the presence of the catalyst

(30) Priorité: 25.05.1993 BE 9300539
(43) Date de publication de la demande: 07.12.1994
(73) Titulaire: SOLVAY POLYOLEFINS EUROPE - BELGIUM (Société Anonyme), 1050 Bruxelles (BE)
(72) Inventeur: Costa, Jean-Louis, B-1850 Grimbergen (BE); Laurent, Vincent, B-1476 Houtain-Le-Val (BE); Francois, Philippe, B-1490 Court-Saint-Etienne-Faux (BE); Vercammen, Dirk, B-9140 Zele (BE)
(74) Mandataire: Troch, Geneviève

(56) Documents cités:
- EP-A- 0 168 317
- EP-A- 0 283 011
- EP-A- 0 523 879
- DE-A- 2 435 609
- FR-A- 2 357 582

## Description

La présente invention concerne un support de catalyseur et un procédé d'obtention de ce support. La présente invention concerne aussi des catalyseurs de polymérisation des α-oléfines obtenus à partir de ces supports, un procédé pour l'obtention de ces catalyseurs ainsi qu'un procédé de polymérisation des α-oléfines en leur présence.

Il est connu de polymériser les α-oléfines au moyen de catalyseurs déposés dans, ou sur, des supports polymériques poreux (EP-0283011; EP-0314131 et EP-344755). Selon ces documents, les supports polymériques donnant les meilleurs résultats sont les (co)polymères du styrène et du divinylbenzène ainsi que les chlorures de polyvinyle.

L'utilisation, pour la fabrication de catalyseurs de polymérisation des α-oléfines, de ces supports de nature chimique différente de celles des polymères finaux et de masse moléculaire moyenne en poids généralement élevée conduit le plus souvent à des polymères d'α-oléfines qui ne présentent pas les qualités optimales souhaitées. En particulier on observe, lors de leur mise en oeuvre, la formation d'agglomérats issus des catalyseurs et qui altèrent les propriétés des objets obtenus.

Par ailleurs, il est généralement difficile de modifier la morphologie de ces supports. Enfin ils sont généralement onéreux ce qui diminue l'intérêt économique des catalyseurs ainsi obtenus.

L'utilisation, à titre de support, de polymères d'α-oléfines permet de résoudre partiellement ces problèmes (EP-0523879). Ce document décrit spécifiquement l'utilisation à titre de support, de particules de polymères d'α-oléfine, de porosité définie et de dimension supérieure à 150 µm. L'utilisation de particules de cette dimension conduit in fine à l'obtention de particules de polymère de taille très élevée difficilement manipulables et transportables par les moyens pneumatiques habituels. Par ailleurs, ce document ne divulgue explicitement que des supports obtenus par traitement de poudre de polymère au moyen d'un solvant hydrocarboné.

La présente invention vise dès lors à obtenir, de manière économiquement intéressante un support polymérique de catalyseur de polymérisation des α-oléfines parfaitement compatible avec le polymère final et qui ne présente pas les désavantages des supports polymériques appartenant à l'art antérieur.

A cet effet, l'invention concerne, à titre principal, un support de catalyseur comprenant au moins un polymère d'α-oléfine(s) se présentant sous la forme de particules de dimension moyenne de 5 à 350 µm et dont le volume poreux généré par les pores de rayon de 1000 à 75000 Å (10⁻¹⁰ m) est d'au moins 0,3 cm³/g susceptible d'être obtenu par polymérisation d'une ou plusieurs α-oléfines au moyen d'un système catalytique (S) contenant un composé catalytique (a) tel que décrit en rapport avec le procédé d'obtention des supports.

Par polymères d'α-oléfines, on entend essentiellement les homopolymères et copolymères des α-oléfines contenant de 2 à 20 atomes de carbone telles que, par exemple, l'éthylène, le propylène, le 1-butène, le 1-pentène, le 1-hexène, les méthyl-1-butènes, les méthyl-1-pentènes, le 1-octène et le 1-décène.

Dans le cadre de la présente invention, sont également considérés comme polymères d'α-oléfines les copolymères des α-oléfines décrites ci-avant avec d'autres monomères insaturés tels que, par exemple, les acides organiques insaturés et leurs dérivés, les esters vinyliques, les composés vinyliques aromatiques, les vinylsilanes ainsi que les dioléfines aliphatiques et monocycliques non conjuguées, les dioléfines alicycliques ayant un pont endocyclique et les dioléfines aliphatiques conjuguées.

De préférence, les supports polymériques selon la présente invention sont choisis parmi les homopolymères d'α-oléfines contenant de 2 à 15, de préférence de 2 à 8 atomes de carbone et les copolymères de ces α-oléfines entre elles. Les homo- et co-polymères du propylène conviennent particulièrement bien.

Un avantage des supports selon la présente invention est qu'ils se présentent sous la forme de particules de dimension très variable. La dimension moyenne de ces particules peut atteindre des valeurs aussi faibles que 5 µm. Cette dimension est généralement supérieure ou égale à 8 µm et de préférence supérieure ou égale à 15 µm. Le plus souvent ces particules ont une dimension moyenne inférieure ou égale à 350 µm, de préférence inférieure ou égale à 190 µm, et plus particulièrement inférieure ou égale à 150 µm. Des supports particulièrement préférés ont une dimension moyenne de 20 à 120 µm.

Le volume poreux de ces supports est également une de leurs caractéristiques importantes. Les supports selon l'invention présentent un volume poreux généré par les pores de rayon de 1000 à 75000 Å (10⁻¹⁰m) d'au moins 0,3 cm³/g et plus particulièrement d'au moins 0,5 cm³/g.

Les supports polymériques selon la présente invention contiennent généralement une certaine quantité de résidus catalytiques issus des systèmes catalytiques (S), tels que définis ci-après, qui leur ont donné naissance. Ces résidus catalytiques, exprimés en poids du composé (a) défini ci-après par kg de support, sont le plus souvent d'au moins environ 0,3 g, de préférence d'au moins environ 2 g et plus particulièrement d'au moins environ 5 g de composé (a) par kg de support. Il est en outre souhaitable que cette quantité de résidus catalytiques soit inférieure ou égale à environ 170 g, généralement inférieure ou égale à environ 90 et plus particulièrement inférieure ou égale à environ 60 g de composé (a) par kg de support. On obtient de particulièrement bons résultats lorsque la quantité de résidu catalytique est de 10 à 50 g de composé (a) par kg de support.

Il va de soi que les supports ayant subi ultérieurement un traitement visant à en éliminer ces résidus catalytiques rentrent également dans le cadre de la présente invention.

L'utilisation de ces supports pour la préparation de catalyseurs de polymérisation des α-oléfines permet l'obtention de polymères dont la teneur en composés minéraux, appelée plus généralement teneur en cendres, est particulièrement faible.

Dans un second aspect, la présente invention concerne un procédé d'obtention de ces supports. Les supports selon la présente invention sont susceptibles d'être obtenus par polymérisation d'une ou plusieurs α-oléfines telles que définies ci-avant au moyen d'un système catalytique (S) contenant un composé catalytique (a) à base d'un métal de transition appartenant aux groupes IIIb, IVb, Vb et VIb du Tableau Périodique (version publiée dans Handbook of Chemistry and Physics, 50e édition, page B-3 - 1969-1970) et un activateur choisi parmi les composés organoaluminiques et, en général ceux comprenant au moins une liaison aluminium-carbone et pouvant éventuellement comprendre de l'oxygène et/ou un ou plusieurs halogènes.

L'activateur est préférentiellement choisi parmi les composés répondant à la formule globale

Al R¹ ₓ X₃₋ₓ (I)

dans laquelle
- R¹ est un radical hydrocarboné contenant de 1 à 18 atomes de carbone;
- X est un halogène; et
- x est un nombre quelconque tel que 0 < x ≤ 3.

Le composé catalytique (a) utilisé pour la fabrication des supports selon l'invention se présente sous la forme de particules dont la dimension moyenne est de 2 à 200 µm et dont le volume poreux généré par les pores de rayon de 200 à 15000 Å (10⁻¹⁰ m) est d'au moins 0,02 cm³/g. De préférence ces particules sont telles que leur dimension moyenne est d'au moins 5 µm et plus particulièrement d'au moins 10 µm. Cette dimension est le plus souvent inférieure ou égale à 100 µm et de préférence inférieure ou égale à 50 µm. Le volume poreux des particules de composé (a) généré par les pores de rayon de 200 à 15 000 Å est de préférence d'au moins 0,05 et plus particulièrement d'au moins 0,1 cm³/g. Ce volume poreux est en outre généralement inférieur à 1 cm³/g.

Ce composé catalytique (a) appartient aux composés solides à base de TiCl₃, de forme cristalline δ telle que définie par exemple dans Journal of Polymer Science 51, pages 399-410 (1961), obtenus par un procédé impliquant la réduction d'un composé de titane tétravalent par un réducteur oganoaluminique. Le composé catalytique (a) est obtenu par traitement thermique, en présence d'un agent halogéné, du matériau liquide résultant de la mise en contact de tétrachlorure de titane (TiCl₄), prétraité par un composé électrodonneur avec une composition (D) correspondant à la formule générale

Al Rₚ(Y)_{q} X_{3-(p+q)} (II)

dans laquelle
- R représente un radical hydrocarboné;
- Y représente un groupement choisi parmi -OR', -SR' et -NR'R" dans lequel R' et R" représentent chacun un radical hydrocarboné ou un atome d'hydrogène;
- X représente un halogène;
- p est un nombre quelconque tel que 0 < p ≤ 2,5;
- q est un nombre quelconque tel que 0,5 < q < 3, la somme (p+q) étant telle que 0,5 < (p+q) ≤ 3.

Dans la formule (II), R, R' et R" sont, dans le cas où ils représentent un radical hydrocarboné, généralement choisis chacun et indépendamment l'un de l'autre parmi :
- les radicaux alkyles linéaires ou branchés, contenant de 1 à 12 atomes de carbone;
- les radicaux alkényles contenant de 2 à 12 atomes de carbone;
- les radicaux cycloalkyles, éventuellement substitués, contenant de 5 à 12 atomes de carbone;
- les radicaux aryles, éventuellement substitués, contenant de 6 à 35 atomes de carbone;
- les radicaux arylalkyles contenant de 7 à 20 atomes de carbone.

Dans la formule (II), q est de préférence supérieur à 0,65 de préférence supérieur ou égal à 0,7. p est de préférence inférieur ou égal à 2,45. On obtient de bons résultats lorsque 1 ≤ p ≤ 2.

La composition (D) est de préférence telle que X est du chlore, R est un radical alkyle linéaire ou branché contenant de 1 à 12 atomes de carbone, Y est un groupement -OR' dans lequel R' est un radical alkyle ou aryle tel que défini ci-avant.

Pour la préparation du composé catalytique (a), la composition (D) est mise en contact avec TiCl₄, lui-même prétraité par un composé électrodonneur. Ce composé électrodonneur est choisi en général parmi les composés organiques comprenant un ou plusieurs atomes ou groupements présentant une ou plusieurs paires d'électrons libres susceptibles d'assurer la coordination avec le titane. De préférence, le composé électrodonneur est choisi dans la famille des éthers aliphatiques, et plus particulièrement parmi ceux dont les radicaux aliphatiques comprennent de 2 à 8 atomes de carbone, de préférence 4 à 6 atomes de carbone. L'éther diisoamylique et l'éther di-n-butylique donnent de particulièrement bons résultats.

Le rapport molaire entre le TiCl₄ et le composé électrodonneur peut varier de 0,01 mole à 20 moles de TiCl₄ par mole de composé électrodonneur.

Les conditions générales de mise en contact du TiCl₄, prétraité par le composé électrodonneur (appelé ci-après plus brièvement "TiCl₄ prétraité"), avec la composition (D) ne sont pas critiques pour autant qu'elles conduisent à la formation d'un matériau liquide substantiellement homogène et exempt de solide. En général, on introduit la composition (D), sous forme liquide pure ou sous forme diluée dans un diluant hydrocarboné inerte généralement choisi parmi les hydrocarbures aliphatiques, cycloaliphatiques et aromatiques liquides tels que les alcanes, les isoalcanes liquides et le benzène dans le TiCl₄ prétraité, luimême sous forme liquide ou dilué dans un diluant hydrocarboné inerte identique ou différent de celui dans lequel la composition (D) est éventuellement diluée.

La composition (D) et le TiCl₄ prétraité sont mis en contact dans des quantités respectives telles qu'il se produise une réduction au moins partielle du TiCl₄ sans production substantielle concomittante de précipité solide. A cet effet, la quantité de composition (D) mise en contact avec le TiCl₄ prétraité est telle que le rapport atomique entre l'aluminium contenu dans la composition (D) et le titane contenu dans le TiCl₄ prétraité est généralement compris entre 0,05 et 10.

La température à laquelle est opérée la mise en contact entre la composition (D) et le TiCl₄ prétraité est généralement de 0 à 60 °C, de préférence de 10 à 40 °C.

Le matériau liquide ainsi obtenu est alors transformé en particules solides par traitement thermique, à une température d'environ 20 à environ 150 °C, de préférence de environ 60 à environ 130 °C, en présence d'un agent halogéné.

Par "agent halogéné" on entend désigner tous les agents dont la présence contribue à transformer le trichlorure de titane solide qui se forme au cours du traitement thermique du matériau liquide en la forme cristalline δ, violette et stéréospécifique.

Ces agents sont généralement choisis parmi les composés halogénés inorganiques, les composés halogénés organiques, les halogénures d'hydrocarbylaluminium, les composés interhalogénés et les halogènes. Les composés halogénés inorganiques et les hydrocarbures halogénés conviennent bien.

La quantité d'agent halogéné mis en oeuvre est généralement comprise entre 0,1 et 20 moles d'agent halogéné par mole de trichlorure de titane présent dans le matériau liquide.

Cet agent halogéné peut être introduit dans le milieu réactionnel à n'importe quel moment du traitement thermique.

On obtient de particulièrement bons résultats lorsque l'agent halogéné est le TiCl₄. Dans ce cas, la quantité totale de TiCl₄ mise en oeuvre est telle que le rapport molaire entre le titane mis en oeuvre et les radicaux R provenant de la composition (D) est supérieur à 2,7.

Il s'avère alors également avantageux de mettre en oeuvre l'entièreté du TiCl₄ dès le début de la synthèse du composé (a).

Les particules de solide à base de trichlorure de titane complexé issues du traitement thermique sont ensuite le plus souvent soumises à un traitement de mûrissage généralement effectué à la température atteinte à la fin du traitement thermique. La durée de ce traitement est généralement de 15 minutes à 24 heures, de préférence de 30 minutes à 5 heures.

Il peut s'avérer avantageux de soumettre les particules du composé catalytique (a) à un traitement d'activation visant à maintenir la stabilité de ses propriétés et/ou à en augmenter la stéréospécificité. Ce traitement consiste à mettre les particules de composé catalytique (a) de préférence séparées du milieu dans lequel elles ont été préparées en contact avec un agent d'activation choisi parmi les composés organoaluminiques et les produits de la réaction d'un composé organoaluminique avec un composé choisi parmi les composés hydroxyaromatiques dont le groupe hydroxyle est stériquement bloqué. On trouvera d'autres détails en rapport avec ce traitement d'activation et notamment en rapport avec la nature des composés organoaluminiques et hydroxyaromatiques, avec les conditions opératoires dans lesquelles on effectue ce traitement dans les brevets BE-A-803875 et EP-0261727 (SOLVAY) dont le contenu est incorporé par référence dans la présente description.

On trouvera également des détails pratiques concernant la préparation du composé catalytique (a) et en particulier la nature de la composition (D), son mode de préparation et les conditions opératoires à utiliser dans la demande de brevet EP-A-0485006 (SOLVAY) dont le contenu est incorporé par référence dans la présente description.

Le composé (a) ainsi obtenu est alors de préférence séparé de son milieu de préparation, généralement lavé et éventuellement séché avant d'être mis en oeuvre dans la réaction de polymérisation décrite ci-avant pour l'obtention des supports selon la présente invention. Il est également possible de le stocker sous forme de suspension dans un diluant hydrocarboné inerte ou sous forme sèche avant sa mise en oeuvre dans ladite réaction de polymérisation.

La teneur en trichlorure de titane de ces composés (a) est le plus souvent supérieure ou égale à 50 % en poids, de préférence supérieure ou égale à 75 % en poids. La teneur en composé électrodonneur de ces composés (a) est généralement inférieure ou égale à 15 % en poids et de préférence inférieure ou égale à 10 % en poids.

Le composé (a) ainsi obtenu se présente sous la forme de particules de forme sensiblement sphérique, de distribution granulométrique étroite. Il est possible de régler sa morphologie et en particulier sa porosité en faisant varier, dans les limites décrites ci-avant, les conditions opératoires de sa préparation et en particulier la nature de la composition (D).

La polymérisation permettant l'obtention du support peut être effectuée selon n'importe quel procédé connu : en solution ou en suspension dans un diluant hydrocarboné inerte généralement choisi parmi les hydrocarbures aliphatiques, cycloaliphatiques et aromatiques liquides tels que les alcanes, les isoalcanes liquides et le benzène ou dans le monomère, ou un des monomères, maintenu à l'état liquide ou encore en phase gazeuse. De préférence les supports sont obtenus par polymérisation dans un des monomères maintenu à l'état liquide ou en suspension dans un hydrocarbure aliphatique. On obtient de bons résultats lorsque cette polymérisation est effectuée en suspension dans les alcanes.

La température de polymérisation est choisie généralement de 0 à 200 °C et de préférence de 20 à 90 °C. La pression est choisie le plus souvent entre la pression atmosphérique et 50 atmosphères et de préférence entre 1 et 45 atmosphères. Cette pression est bien entendu fonction des conditions dans lesquelles est effectuée la polymérisation.

La polymérisation peut être effectuée en continu ou en discontinu.

La polymérisation est de préférence effectuée dans des conditions telles qu'il se forme une quantité de polymère d'au moins 5 grammes par gramme de composé catalytique (a). De préférence la quantité de polymère formée est supérieure ou égale à environ 10 grammes et plus particulièrement supérieure ou égale à environ 15 grammes par gramme de composé catalytique (a). Il s'avère également avantageux d'effectuer cette polymérisation dans des conditions telles que la quantité de polymère formé soit inférieure ou égale à environ 3300 grammes de polymère, de préférence inférieure ou égale à environ 500 grammes et plus particulièrement inférieure ou égale à environ 200 grammes de polymère par gramme de composé (a). On obtient de bons résultats lorsque la quantité de polymère formée est de environ 20 à environ 100 g par g de composé (a).

Pour effectuer cette polymérisation, on peut introduire, dans le réacteur de polymérisation, l'activateur et le composé catalytique (a) de manière séparée. On peut également les mettre en contact, à une température comprise entre - 40 ° et 80 °C, pendant une durée qui est dépendante de cette température et qui peut aller d'une heure à plusieurs jours, avant de les introduire dans le réacteur de polymérisation.

La quantité totale d'activateur mis en oeuvre n'est pas critique; elle est en général supérieure à 0,1 mmole par litre de diluant, de monomère liquide, ou de volume de réacteur, de préférence supérieure à 0,5 mmole par litre.

La quantité de composé catalytique (a) mise en oeuvre est de préférence déterminée en fonction de sa teneur en TiCl₃. Elle est choisie en général de manière à ce que la concentration du milieu de polymérisation soit supérieure à 0,01 mmole de TiCl₃ par litre de diluant, de monomère liquide ou de volume de réacteur et de préférence supérieure à 0,05 mmole par litre.

Le rapport des quantités de composé organométallique et de composé catalytique (a) n'est pas critique non plus. On le choisit généralement de manière à ce que le rapport molaire de l'activateur au TiCl₃ présent dans le composé catalytique (a) soit compris entre 0,5 et 20, de préférence entre 1 et 15. Les meilleurs résultats sont obtenus lorsque ce rapport molaire est compris entre 2 et 12.

Le poids moléculaire moyen des polymères constitutifs du support selon le procédé de l'invention peut être réglé par l'addition au milieu de polymérisation d'un ou plusieurs agents de réglage du poids moléculaire moyen comme l'hydrogène, le diéthylzinc, les alcools, les éthers et les halogénures l'alkyle.

Les supports ainsi obtenus se présentent sous la forme de particules sensiblement sphériques, de distribution granulométrique étroite. Leur morphologie peut être aisément réglée en fonction de l'application souhaitée. En effet, les propriétés de ces supports dépendent d'une part de la morphologie des composés (a) qui leur ont donné naissance et qui peut être aisément modifiée comme décrit ci-avant et d'autre part des conditions dans lesquelles la polymérisation est effectuée. En particulier, les dimensions moyennes des particules de support peuvent être réglées par la quantité de polymère formée et ses propriétés physiques peuvent être réglées en faisant varier, par exemple, la nature du (des) monomère(s), la quantité d'agent de réglage de la masse moléculaire ou en introduisant un ou plusieurs additifs appelés généralement terconstituants dans le milieu de polymérisation.

On constate que la morphologie de ces supports est particulièrement bien adaptée à la préparation des catalyseurs tels que décrits ci-après. En particulier la taille des particules de support est avantageusement telle que la quasi totalité du composé catalytique (b) tel que décrit ci-après est fixée dans le support. De même l'utilisation de support de porosité différente de celle décrite ci-avant ne permet pas la fixation du composé (b) dans le support.

On constate également qu'il n'est pas nécessaire d'effectuer un traitement complémentaire des supports selon la présente invention visant à en modifier les caractéristiques morphologiques.

Pour des raisons économiques, ces traitements sont dès lors de préférence évités. On peut néanmoins effectuer des traitements visant à éliminer les résidus catalytiques issus des systèmes catalytiques (S).

Un troisième aspect de la présente invention concerne des catalyseurs utilisables pour la polymérisation des α-oléfines comprenant un composé catalytique (b), de préférence différent du composé catalytique (a) et contenant au moins un métal de transition appartenant aux groupes IIIb, IVb, Vb et VIb du Tableau Périodique fixé dans, ou sur, les supports définis ci-avant. De préférence le composé catalytique (b) est fixé dans le support.

Selon une première variante des catalyseurs de la présente invention, le composé catalytique (b), appelé ci-après plus simplement composé (b), est un composé métallocène dérivé des métaux de transition repris ci-avant. Dans une deuxième variante, le composé (b) est choisi parmi les composés solides comprenant au moins du titane, du magnésium et du chlore. Enfin, selon une troisième variante, le composé (b) est choisi parmi les composés solides à base de trichlorure de titane complexé par un donneur d'électrons choisi parmi les composés organiques comprenant un ou plusieurs atomes ou groupements présentant une ou plusieurs paires d'électrons libres.

Ces différents composés (b) ainsi que les procédés pour leur obtention sont bien connus de l'homme du métier et font partie de l'état de la technique.

Les catalyseurs selon la présente invention sont généralement obtenus en ajoutant au milieu de préparation du composé (b), à un moment quelconque, le support tel que décrit ci-avant de manière à ce que le composé catalytique (b) se fixe dans et/ou sur, ledit support. A cet effet, il est avantageusement fait usage de procédés de préparation du composé (b) dans lesquels le milieu réactionnel se présente au moins à un moment quelconque sous la forme d'un matériau liquide substantiellement homogène et exempt de solide.

Dans ce cas, le support est ajouté de préférence audit matériau liquide. Il va de soi que le support peut également être ajouté au milieu de préparation dudit composant (b) avant l'obtention d'un tel matériau liquide.

A titre d'exemples de composés (b) entrant dans la composition des catalyseurs selon la première variante, on peut citer les composés contenant au moins un métallocène neutre dérivé d'un métal de transition et au moins un agent ionisant tel que le métal du métallocène neutre est lié à au moins un atome d'halogène.

Le métallocène neutre est habituellement choisi parmi les composés de formule

(Cₚ)ᵣ(Cₚ')ₛ MXₜZᵤ (IV)

dans laquelle
- Cₚ et Cₚ' désignent chacun un radical hydrocarboné insaturé coordiné à l'atome central M, les groupes Cₚ et Cₚ' pouvant être liés par un pont covalent,
- M désigne le métal de transition,
- r, s, t et u désignent des nombres entiers tels que (r + s + t + u) est égal à la valence du métal de transition M, t > 0, u ≥ 0 et r et/ou s ≠ 0,
- X désigne un halogène, et
- Z désigne un radical hydrocarboné pouvant éventuellement comprendre de l'oxygène.

De préférence, le métal de transition est sélectionné parmi le scandium, le titane, le zirconium, l'hafnium et le vanadium. Le zirconium convient particulièrement bien. Les groupes Cₚ et Cₚ' représentent chacun avantageusement un groupe mono- ou polycyclique éventuellement substitué comprenant de 5 à 50 atomes de carbone liés par des doubles liaisons conjuguées. Comme exemple typique on peut citer le radical cyclopentadiényle, indényle ou fluorényle ou un dérivé substitué de ce radical, dans lequel au moins un atome d'hydrogène est substitué par un radical hydrocarboné comprenant jusqu'à 10 atomes de carbone. Il peut également s'agir d'un radical dérivé d'un élément choisi parmi le groupe VA du tableau périodique, par exemple l'azote ou le phosphore.

Les métallocènes de formule (IV) préférés sont ceux dans lesquels les groupes Cₚ et Cₚ' sont choisis parmi les radicaux cyclopentadiényle, indényle et fluorényle. De bons résultats sont obtenus avec ceux dont les groupes Cₚ et Cₚ' sont liés par un pont covalent du type alkyle. Les métallocènes dont le métal de transition est choisi parmi le titane, le zirconium et l'hafnium conviennent très bien. On obtient des résultats particulièrement satisfaisants avec les métallocènes dérivés du zirconium.

Selon l'invention, on entend désigner par agent ionisant, un composé comprenant une première partie qui présente les propriétés d'un acide de Lewis et qui est capable d'ioniser le métallocène neutre, et une deuxième partie, qui est inerte vis-à-vis du métallocène ionisé, et qui est capable de stabiliser le métallocène ionisé. L'agent ionisant peut être un composé ionique comprenant un cation présentant les propriétés d'un acide de Lewis, et un anion constituant la deuxième partie précitée de l'agent ionisant. Les anions ayant conduit à de très bons résultats sont les organoborates. On entend désigner par organoborate un dérivé du bore, dans lequel l'atome de bore est lié à 4 substituants organiques. On peut citer comme exemples d'agents ionisants ioniques, le tétrakis(pentafluorophényl)borate de triphénylcarbénium, le tétrakis(pentafluorophényl)borate de N,N-diméthylanilinium et le tétrakis(pentafluorophényl)borate de tri-(n-butyl)ammonium. Les acides de Lewis cationiques préférés sont le carbénium, le sulfonium et l'oxonium.

Les agents ionisants tout particulièrement préférés sont ceux comprenant un cation de type carbénium.

En variante, l'agent ionisant peut également être un composé nonionique présentant les propriétés d'un acide de Lewis qui est capable de transformer le métallocène neutre en métallocène cationique. A cet effet, l'agent ionisant est lui-même transformé en un anion inerte vis-à-vis du métallocène cationique qui est capable de stabiliser celui-ci. On peut citer comme exemples d'agent ionisant nonionique, le tri(pentafluorophényl)bore, le triphénylbore, le triméthylbore, le tri(triméthylsilyl)borate et les organoboroxines.

L'agent ionisant est de préférence sélectionné parmi le tétrakis(pentafluorophényl)borate de triphénylcarbénium et le tri(pentafluorophényl)bore.

Le tétrakis(pentafluorophényl)borate de triphénylcarbénium convient particulièrement bien.

Les composés (b) particuliers ainsi définis comprennent habituellement :
- de 0,1 à 30 % en poids du métal de transition, typiquement de 0,2 à 20 % en poids, les valeurs de 0,5 à 10 % en poids étant les plus courantes;
- de 1 à 50 % en poids d'halogène, avantageusement de 5 à 30 % en poids.

Ce composé (b) contient généralement l'agent ionisant en une quantité suffisante pour pouvoir ioniser la plus grande partie (par exemple au moins 80 % en poids), de préférence la totalité du métallocène neutre. Les quantités optimales respectives en métallocène neutre halogéné et en agent ionisant dans le composé (b) vont dès lors dépendre du métallocène et de l'agent ionisant sélectionné. En pratique, le composé (b) comprend avantageusement des quantités de métallocène neutre et d'agent ionisant dans un rapport molaire de 0,5 à 2; elles sont de préférence sensiblement équimolaires. De préférence, le rapport pondéral du métallocène neutre à l'agent ionisant est de 0,1 à 10, en particulier de 0,2 à 2.

Les catalyseurs selon la première variante peuvent être obtenus en imprégnant successivement les supports selon l'invention avec une solution du métallocène neutre puis de l'agent ionisant dans un diluant hydrocarboné inerte tel que décrit ci-avant en rapport avec la préparation des supports selon l'invention. Dans ce cas particulier, les hydrocarbures aromatiques conviennent particulièrement bien.

L'ordre dans lequel on effectue ces imprégnations n'est pas critique. On préfère le plus souvent imprégner le support d'abord avec le métallocène neutre et ensuite avec l'agent ionisant.

Les quantités respectives du composé à base de métallocène, du composé à base d'agent ionisant et du support mises en oeuvres sont généralement telles que la quantité du composé (b) contenue dans le catalyseur soit celle décrite ci-après.

Les quantités mises en oeuvre du composé à base d'un métallocène et du composé à base d'un agent ionisant sont habituellement dans un rapport molaire de 0,5 à 2; elles sont de préférence équimolaires.

La température à laquelle les imprégnations sont effectuées peut être toute température inférieure à la température de décomposition du métallocène neutre et du composé à base d'un agent ionisant. La température dépend dès lors de la nature de ces constituants; elle est généralement au moins égale à 0 °C, de préférence à 20 °C; les valeurs au maximum égales à 100 °C étant les plus courantes, celles inférieures à 60 °C, par exemple 50 °C, étant les plus avantageuses.

La durée des imprégnations n'est pas critique. Elle est généralement au moins égale à 1 min, de préférence à 20 min; pour des considérations d'ordre économique, il est souhaitable qu'elle n'excède pas 50 h, en particulier pas 30 h. Une durée d'environ 1 h à environ 5 h convient particulièrement bien.

Dans la deuxième variante, les catalyseurs selon l'invention comprennent un composé (b) choisis parmi les composés solides comprenant au moins du titane, du magnésium et du chlore. A titre d'exemple de ces composés (b), on peut citer les composés comprenant un halogénure de titane supporté sur du chlorure de magnésium ou les complexes solides de chlorure de magnésium et de titane.

Lorsque ces catalyseurs sont utilisés pour la polymérisation du propylène, le composé (b) contient en outre généralement au moins un composé électrodonneur. Le composé électrodonneur est avantageusement choisi parmi les esters d'acides carboxyliques. Les esters d'acides mono- ou dicarboxyliques aromatiques conviennent particulièrement bien.

Les catalyseurs préférés selon la deuxième variante sont obtenus en introduisant le support dans un matériau liquide contenant au moins un composé de titane et un composé de magnésium.

Des exemples de ces composés ainsi que de ces matériaux liquides peuvent être trouvés dans les brevets US-A-3901863 et US-A-4617360 (SOLVAY) ainsi que dans le brevet US-A-4703026 dont le contenu est incorporé par référence à la présente description.

La suspension ainsi obtenue est ensuite généralement traitée de manière à ce que le composé (b) se fixe dans le support. A cet effet, on peut avantageusement traiter la suspension par un composé halogéné. Ce composé est le plus souvent choisi parmi les composés halogénés organiques, les composés halogénés inorganiques et les halogénures organométalliques. A titre d'exemples de composés halogénés organométalliques convenant bien, on peut citer les chlorures organoaluminiques contenant un ou plusieurs radicaux alkyles linéaires ou branchés contenant de 1 à 20 atomes de carbone. Des composés halogénés inorganiques donnant également de bons résultats sont les halogénures de titane et de silicium. Les tétrachlorures de titane et de silicium conviennent bien.

Les conditions de ces traitements sont choisies de telle manière que la quantité de composé (b) contenue dans le catalyseur soit celle décrite ci-après. Des exemples de ces conditions peuvent également être trouvées dans les brevets cités ci-avant.

Lorsque le matériau liquide contient du chlorure de magnésium et un alcoolate de titane, il s'avère avantageux d'ajouter audit matériau liquide des huiles de silicone telles que des polysiloxanes. Les polydiméthylsiloxanes conviennent bien. La quantité de de ces huiles est généralement telle que le rapport en poids de cette huile au chlorure de magnésium est supérieur ou égal à 4, de préférence supérieur ou égal à 7. On obtient de bons résultats lorsque ce rapport en poids est inférieur ou égal à 100, de préférence inférieur ou égal à 70.

A titre d'exemple de catalyseurs préférés selon la troisième variante, on peut citer les catalyseurs obtenus par traitement thermique, en présence d'un agent halogéné et des particules de support décrites ci-avant, du matériau liquide obtenu par mise en contact du TiCl₄ prétraité par un composé électrodonneur avec une composition (0) répondant à la formule générale

Al Rₘ (Y)ₙ X₃₋₍ₘ₊ₙ₎ (III)

dans laquelle
- R représente un radical hydrocarboné;
- Y représente un groupement choisi parmi -OR', -SR' et -NR'R'' dans lequel R' et R'' représentent chacun un radical hydrocarboné ou un atome d'hydrogène;
- X représente un halogène;
- n est un nombre quelconque tel que 0 < n ≤ 0,5;
- m est un nombre quelconque tel que 0 < m < 3, la somme (m+n) étant inférieure ou égale à 3.

Dans la formule (III), n est de préférence un nombre inférieur à 0,45 et de préférence inférieur ou égal à 0,4. Les compositions (0) de formule (III) donnant de bons résultats sont généralement telles que 1 ≤ m ≤ 2.

La composition du matériau liquide obtenu lors de la préparation de ce composé (b) est de préférence différente de celle du matériau liquide obtenu lors de la préparation du composé (a).

La nature du TiCl₄ prétraité par le composé électrodonneur, celle de l'agent halogéné ainsi que les conditions dans lesquelles sont effectués la mise en contact de la composition (0) avec ce TiCl₄ et le traitement thermique sont identiques à celles décrites précédemment pour l'obtention du composé (a).

L'agent halogéné préféré est ici encore le TiCl₄. Dans ce cas il peut s'avérer souhaitable de mettre en oeuvre la totalité de ce TiCl₄ en une fois dès le début de la synthèse du catalyseur. La quantité totale de TiCl₄ mise en oeuvre est telle que le rapport molaire entre le titane mis en oeuvre et les radicaux R présents dans la composition (0) est inférieur ou égal à 2,7.

Les particules de catalyseurs ainsi obtenues peuvent également être soumises aux traitements de mûrissage et/ou d'activation tels que décrits ci-avant en rapport avec le composé (a).

Les catalyseurs selon l'invention présentent un aspect identique à celui des supports utilisés lors de leur obtention.

De forme généralement sphérique, ils ont une dimension de 5 à 350 µm. Cette dimension est généralement supérieure ou égale à 8 µm et de préférence supérieure ou égale à 15 µm. Le plus souvent la dimension moyenne des catalyseurs selon l'invention est inférieure ou égale à 190 µm, et plus particulièrement inférieure ou égale à 150 µm. Les catalyseurs préférés ont une dimension comprise entre 20 et 120 µm. La répartition granulométrique des catalyseurs selon l'invention est généralement étroite. Leur composition est généralement telle que la teneur en composé (b) est d'au moins 20 g par kg de catalyseur, de préférence d'au moins 80 et plus particulièrement d'au moins 150 g par kg de catalyseur. Le plus souvent les catalyseurs selon la présente invention contiennent moins de 850 g de composé (b) par kg de préférence moins de 700 et plus particulièrement moins de 600 g de composé (b) par kg de catalyseur.

La teneur en polymère d'α-oléfine est en outre le plus souvent supérieure ou égale à 150 g par kg de catalyseur, de préférence supérieure ou égale à 300 g. Cette teneur est en outre généralement inférieure à 980 g par kg de catalyseur et plus particulièrement inférieure à 920 g par kg de catalyseur.

Quelle que soit leur morphologie, les catalyseurs selon la présente invention présentent une activité et une stéréospécificité élevées. En particulier on n'observe pas de diminution de l'activité catalytique lorsque le volume poreux augmente et/ou la dimension des particules augmentent.

La présente invention concerne enfin un procédé d'homo- et/ou de copolymérisation des α-oléfines contenant de 2 à 20 atomes de carbone dans lequel on met en contact dans des conditions polymérisantes une ou plusieurs α-oléfines telles que définies ci-avant avec un système catalytique (T) comprenant le catalyseur défini ci-avant et un activateur choisi parmi les composés organoaluminiques tels que définis ci-avant en rapport avec le système catalytique (S). Cet activateur peut être identique à, ou différent de, celui utilisé pour le système catalytique (S).

Les systèmes catalytiques (T) utilisables dans les procédés selon l'invention peuvent également contenir au moins un terconstituant connu pour améliorer leur stéréospécificité et/ou leur activité.

Un procédé de polymérisation particulièrement intéressant concerne la polymérisation de l'éthylène, du propylène, du 1-butène et du 4-méthyl-1-pentène en polymères cristallins au moyen d'un système catalytique (T). Ces systèmes catalytiques (T) s'appliquent également à la copolymérisation des alpha-oléfines avec au moins un comonomère non identique choisi parmi les alpha-oléfines dont la molécule contient de 2 à 18 et de préférence de 2 à 6 atomes de carbone ainsi que les dioléfines comprenant de 4 à 18 atomes de carbone.

Ces systèmes catalytiques (T) s'appliquent encore à la fabrication de copolymères appelés à blocs qui sont constitués au départ d'α-oléfines ou de dioléfines. Ces copolymères à blocs consistent en des blocs distincts de composition variable; chaque bloc consistant en un homopolymère d'une α-oléfine ou en un copolymère comprenant une alpha-oléfine et au moins un comonomère choisi parmi les alpha-oléfines et les dioléfines. Les α-oléfines et les dioléfines sont choisies parmi celles mentionnées ci-dessus.

Les systèmes catalytiques (T) selon l'invention conviennent bien pour la polymérisation de l'éthylène ainsi que pour la polymérisation stéréospécifique du propylène. Ils conviennent en particulier pour la fabrication d'homopolymères du propylène et de copolymères de ce dernier contenant au total au moins 50 % en poids de propylène et de préférence au moins 60 % en poids de propylène. Ils conviennent également bien pour la fabrication d'homopolymères de l'éthylène et de copolymères de ce dernier contenant au total au moins 50 % en poids d'éthylène et de préférence au moins 60 % en poids de ce dernier.

Les conditions opératoires dans lesquelles cette polymérisation peut être effectuée sont semblables à celles définies ci-avant en rapport avec l'obtention des supports.

Un avantage de la présente invention est qu'il est possible d'obtenir des catalyseurs poreux et très actifs. L'utilisation de tels catalyseurs permet dans des conditions très avantageuses d'obtenir des copolymères contenant des quantités élevées de comonomères.

L'utilisation des catalyseurs les plus poreux pour l'obtention de ces copolymères est principalement avantageuse dans les procédés dans lesquels les monomères sont maintenus en phase gazeuse.

Les exemples suivants servent à illustrer l'invention.

La signification des symboles utilisés dans ces exemples, les unités exprimant les grandeurs mentionnées et les méthodes de mesure de ces grandeurs sont explicitées ci-dessous.

La porosité des composés catalytiques (a), des supports et des catalyseurs est mesurée par la méthode de pénétration de mercure au moyen de porosimètres commercialisés par CARLO ERBA Co. dans la zone des rayons de pore compris entre 75 et 75000 Å (10⁻¹⁰ₘ). On obtient ainsi la courbe du volume poreux exprimé en cm³/g en fonction du diamètre des pores.

Le diamètre moyen des particules de support, de catalyseur et de polymère est estimé par observation au microscope optique (grossissement 200) de ces particules mises en suspension dans de la décaline.

| | |
|---|---|
| Ds = | diamètre moyen des particules de support en µm. |
| VPs = | volume poreux interne du support généré par les pores de rayon de 1000 à 75000 Å (10⁻¹⁰ m) exprimé en cm³/g. |
| Da = | diamètre moyen des particules de composé catalytique (a) exprimé en µm. |
| VPa = | volume poreux des composés catalytiques (a) généré par les pores de rayons de 200 à 15000 Å (10⁻¹⁰ m) exprimé en cm³/g. |
| Dc = | diamètre moyen des particules de catalyseur exprimé en µm. |
| VPc = | volume poreux des catalyseurs généré par les pores de rayons compris entre 200 et 15000 Å (10⁻¹⁰ m) exprimé en cm³/g. |
| α = | activité catalytique exprimée conventionnellement en grammes de polymère insoluble dans le milieu de polymérisation, obtenus par heure et par gramme de TiCl₃ contenu dans le catalyseur. Cette activité est appréciée indirectement à partir de la détermination de la teneur résiduelle en titane dans le polymère par fluorescence X. |
| Prod = | quantité de polymère formée lors des essais de polymérisation exprimée en kg de polymère par g de titane. |
| P = | quantité de polymère formée exprimée en gramme de polymère par g de catalyseur mis en oeuvre. |
| Dp = | diamètre moyen des particules de polymère exprimé en µm. |
| PSA = | poids spécifique apparent de la fraction de polymère insoluble exprimé en g/dm³. |
| fTri = | indice d'isotacticité du polymère, apprécié par la fraction molaire de triades isotactiques (enchaînement séquencé de trois unités monomériques de propylène en configuration méso) dans le polymère total. Cette valeur est déterminée par résonance magnétique nucléaire en ¹³C comme décrit dans Macromolecules, volume 6, n° 6, page 925 (1973). |
| MFI = | indice de fluidité en fondu mesuré sous une charge de 2,16 kg à 230 °C et exprimé en g/10 min (norme ASTM D 1238 (1986)). |
| Isoamyl = | radical isoamyle (CH₃)₂ CH-CH₂-CH₂-. |
| MI = | indice de fluidité en fondu mesuré sous une charge de 2,16 kg à 190 °C et exprimé en g/10 min (norme ASTM D 1238 (1986)). |
| HLMI = | indice de fluidité en fondu mesuré sous une charge de 21,6 kg à 190 °C et exprimé en g/10 min (norme ASTM D 1238 (1986)). |
| HLMI/MI = | mesure de la distribution des poids moléculaires des polymères. |

### Exemples 1 à 2

### A - Préparation du composé catalytique (a)

Dans un réacteur d'un litre muni d'un agitateur à une pale tournant à 350 tr/min, préalablement purgé à l'azote, on introduit 100 ml d'hexane et 69 ml (340 mmole) d'éther diisoamylique (EDIA).

Cette solution étant maintenue à 30 °C, on y additionne, pendant 30 minutes, 60 ml de TiCl₄.

Après cet ajout, une composition (D) de formule brute Al Et_{1,2} (0 Isoamyl)_{0,8} Cl obtenue au préalable par mise en contact de 80 ml d'hexane avec successivement 17 ml (136 mmole) de chlorure de diéthylaluminium (DEAC) et 12 ml d'alcool isoamylique est introduite en une heure. Le rapport molaire entre le titane et le radical éthyle est de 3,3.

La température est alors progressivement augmentée pour atteindre 100 °C après 2 heures. Au cours de ce traitement thermique apparaissent les premières particules de solide. La suspension est maintenue à cette température pendant une heure (mûrissage) puis ramenée à température ambiante.

La phase liquide est alors séparée du composé catalytique (a) par décantation et celui-ci est lavé à l'hexane et séché sous courant d'azote.

Ce composé catalytique (a) de couleur violacée contient, par kg, 814 g de TiCl₃, le Da et le VPa sont respectivement de 15 et 0,1.

### B - Préparation des supports

Dans un autoclave de 1 l préalablement conditionné, on introduit successivement 220 ml d'hexane, 25 ml d'une solution à 80 g/l de DEAC dans l'hexane et environ 1 gramme de composé (a) préparé ci-avant. Après avoir amené la température à 30 °C, on introduit une quantité de propylène telle que renseignée dans le Tableau I ci-après tout en veillant à ne pas dépasser 1,5 bars de propylène dans l'autoclave. Lorsque la pression partielle en propylène est redevenue presque nulle, le support est lavé à l'hexane.

Les caractéristiques de ces supports sont également renseignées dans le Tableau I. A l'exemple 1, une partie du support est prélevée, lavée et séchée en vue d'en déterminer les caractéristiques.

### C - Préparation des catalyseurs

Dans l'autoclave contenant le support, on ajoute, à 30 °C, 23 ml (45,2 mmole) d'EDIA avant d'introduire, en une demi-heure, 20 ml de TiCl₄.

Cette suspension étant maintenue à 30 °C, on y additionne, pendant 1 heure, une composition (O) de formule brute Al Et_{1,75} (O Isoamyl)_{0,25} Cl obtenue au préalable par mise en contact de 27 ml d'hexane avec successivement 6 ml de DEAC et 1,3 ml d'alcool isoamylique. Le rapport molaire entre le titane et le radical éthyle est de 2,3.

La température est alors progressivement augmentée pour atteindre 100 °C après 1 heure. Cette température est maintenue pendant deux heures avant d'être ramenée à température ambiante.

La phase liquide est alors séparée du catalyseur par décantation puis ce dernier est lavé à l'hexane et séché sous courant d'azote.

Les propriétés de ces catalyseurs, de couleur violacée, sont reprises dans le Tableau I.

### D - Polymérisation du propylène en suspension dans le monomère liquide en présence des solides catalytiques (conditions de référence)

Dans un autoclave de 5 l, préalablement séché, on introduit sous balayage d'azote sec :
- 400 mg de DEAC (sous forme d'une solution dans l'hexane à 80 g/l);
- une quantité de solide catalytique telle que la quantité de TiCl₃ introduite est de 60 mg environ (le rapport molaire entre le DEAC et le TiCl₃ présent dans le solide vaut ainsi environ 10);
- de l'hydrogène sous pression partielle d'environ 1 bar;
- 3 l de propylène liquide.

On maintient le réacteur à 65 °C sous agitation pendant 3 heures. Ensuite, on dégaze le propylène excédentaire et on récupère le polypropylène (PP) formé se présentant sous forme de grains de morphologie régulière.

Les résultats obtenus au cours des essais de polymérisation avec les différents solides catalytiques sont aussi consignés au Tableau I ci-après.

**TABLEAU I**

| Exemples | 1 | 2 |
|---|---|---|
| Préparation des supports | | |
| Poids de composé (a) (g) | 0,6 | 1,6 |
| Quantité de propylène (g) | 35 | 25 |
| Ds | 90 | - |
| VPs | 0,77 | - |
| Composition (g de support/g composé (a) mis en oeuvre) | 40 | 11 |
| Aspect de surface | irrégulier | irrégulier |

| Caractérisation des catalyseurs | | |
|---|---|---|
| Teneur en TiCl₃ (g/kg) | 361 | 506 |
| Dc | 90 | 40 |
| VPc | 0,2 | 0,28 |
| Aspect de surface | irrégulier | irrégulier |

| Résultats en polymérisation | | |
|---|---|---|
| α | 4140 | 3770 |
| PSA | 280 | 348 |
| fTri | 93 | 94 |
| MFI | 6,7 | 2,6 |

### Exemple comparatif 3R

Dans un réacteur d'un litre muni d'un agitateur à une pale tournant à 250 tr/min, préalablement purgé à l'azote, on introduit 100 ml d'un mélange sec d'hydrocarbures aliphatiques bouillant à 175 °C (commercialisé sous le nom d'ISOPAR H par EXXON CHEMICAL) et 60 ml de TiCl₄.

Cette solution étant maintenue à 30 °C, on y additionne, pendant 30 minutes, 69 ml (340 mmole) de di-isoamyl-éther (EDIA).

Après cet ajout, une composition de formule brute Al Et_{1,4} (O Isoamyl)_{0,6} Cl obtenue au préalable par mise en contact de 80 ml d'ISOPAR avec successivement 17 ml (136 de chlorure de diéthylaluminium (DEAC) et 9 ml d'alcool isoamylique est introduite en une demi-heure. La température est alors progressivement augmentée pour atteindre 100 °C après 1 heure. Au cours de ce traitement thermique apparaissent les premières particules de solide. La suspension est maintenue à cette température pendant deux heures (mûrissage) puis ramenée à température ambiante.

La phase liquide est alors séparée du composé catalytique (a) par décantation et le composé (a) est lavé à l'hexane et séché sous courant d'azote.

Ce catalyseur de couleur violacée contient, par kg, 770 g de TiCl₃, son Dc est compris entre 15 et 25, et son VPc de 0,18.

Soumis au test de polymérisation tel que décrit à l'exemple 1, ce catalyseur conduit, avec une activité α de 2200, à la formation d'un polymère présentant un PSA de 318, un MFI de 25,1, un fTri de 93.

La comparaison de cet essai avec les exemples selon l'invention démontre que ces derniers présentent une activité particulièrement élevée même lorsque leur volume poreux est élevé.

### Exemples 4 et 5

Le catalyseur de l'exemple 4 est obtenu de manière identique à celle utilisée pour l'exemple 1 mais en remplaçant aux étapes A et C l'hexane par l'ISOPAR. En outre, à l'étape A, la température est augmentée à 100 °C en une heure puis maintenue à cette valeur pendant 2 heures.

Le catalyseur de l'exemple 5 est obtenu en reproduisant celui de l'exemple 4 mais en ajoutant à l'étape A, 14,8 ml d'alcool isoamylique. La formule brute de la composition (D) ainsi obtenue est Al Et₁ (O Isoamyl)₁ Cl.

Les caractéristiques de ces exemples sont reprises au Tableau II ci-après.

**TABLEAU II**

| Exemples | 4 | 5 |
|---|---|---|
| Préparation des supports | | |
| Poids de composé (a) (g) | 2,3 | 1,6 |
| Da | 20 | 25 |
| VPa | 0,2 | 0,17 |
| Quantité de propylène (g) | 70 | 65 |
| Ds | 90 | 120 |
| VPs | 0,75 | 0,55 |
| Composition (g de support/g composé (a) mis en oeuvre) | 21 | 28 |
| Aspect de surface | irrégulier | lisse |

| Caractérisation des catalyseurs | | |
|---|---|---|
| Teneur en TiCl₃ (g/kg) | 296 | 252 |
| Dc | 90 | 120 |
| VPc | 0,44 | 0,22 |
| Aspect de surface | irrégulier | lisse |

| Résultats en polymérisation | | |
|---|---|---|
| α | 3570 | 3700 |
| PSA | 336 | 347 |
| fTri | 91 | 91 |
| MFI | 6,1 | 5,8 |

### Exemples 6 et 7

Ces exemples illustrent la préparation de catalyseurs dans lesquels le composé (b) comprend un dérivé de titane supporté sur chlorure de magnésium.

Le composé catalytique (a) est préparé comme décrit aux exemples 1 et 2, point A.

Le support est obtenu en reproduisant la partie B des exemples 1 et 2. Les quantités de réactifs mis en oeuvre pour la préparation de ces supports sont reprises dans le Tableau III ci-après.

Avant d'être utilisé pour la préparation des catalyseurs, le support est traité, sous atmosphère inerte, par 12.5 ml d'éthanol anhydre pendant 30 minutes à 80 °C et lavé à l'hexane. Ce traitement est ensuite répété une seconde fois et le support est séché. Ces derniers traitements qui ont pour but d'éliminer les résidus catalytiques provenant du composé catalytique (a) ne modifient pas la morphologie des supports.

### Préparation des catalyseurs

Dans un autoclave de 1 litre préalablement conditionné sous azote, on introduit 100 ml d'une solution obtenue au préalable, par mélange à 90 °C pendant 4 heures, de 76 g de chlorure de magnésium et 550 ml de tétra-n-butylate de titane (Ti(OBu₄)) dans 400 ml d'heptane.

On y ajoute ensuite 420 ml d'hexane, 100 ml d'huile de silicone commercialisé sous le nom de FLUID 200 (50 cSt) par DOW CORNING ainsi que la quantité de support mentionnée dans le Tableau III ci-après.

La température étant maintenue à 10 °C, on introduit pendant 2 heures 37 ml de SiCl₄ avant d'augmenter progressivement la température pour atteindre 100 °C après une heure. Cette température est maintenue pendant deux heures.

La phase solide est alors isolée par décantation, lavée à l'hexane et on y ajoute, successivement et à température ambiante, 375 ml d'hexane et 42 ml de TiCl₄ pendant 1 heure. La température est alors progressivement augmentée pour atteindre 100 °C après une heure et maintenue à cette valeur pendant deux heures supplémentaires.

Après séparation et lavage de la phase solide, on y ajoute 1,1 ml de diisobutylphtalate. La température est alors progressivement augmentée pour atteindre 100 °C après une heure et maintenue à cette valeur pendant une heure.

La phase solide est alors isolée par décantation et lavée à l'hexane avant d'y ajouter pendant 1/2 heure, 42 ml de TiCl₄. La température est ensuite à nouveau augmentée pour atteindre 100 °C après une heure et maintenue à cette température pendant deux heures.

Le catalyseur est enfin isolé par décantation, lavé à l'hexane et séché.

### Polymérisation du propylène

La polymérisation du propylène en présence de ces catalyseurs est effectuée dans des conditions similaires à celles décrites aux exemples 1 et 2 point D sauf en ce qui concerne la durée (1 h) et la température (70 °C).

Le système catalytique (T) mis en oeuvre contient 2 mmoles de trialkylaluminium (TEAL), 0,2 mmoles de diphényldiméthoxysilane et une quantité de catalyseur telle que le rapport molaire entre le titane contenu dans le catalyseur et l'aluminium du TEAL soit de 200.

Les résultats de ces deux essais de même que l'analyse des catalyseurs sont repris dans le Tableau III ci-après.

**TABLEAU III**

| Exemples | 6 | 7 |
|---|---|---|
| Préparation des supports | | |
| Poids de composé (a) (g) | 1,25 | 1,25 |
| Quantité de propylène (g) | 36 | 36 |
| Ds | 80 | 80 |
| VPs | 0,75 | 0,75 |
| Composition (g de support/g composé (a) mis en oeuvre) | 20 | 20 |
| Aspect de surface | irrégulier | irrégulier |

| Caractérisation des catalyseurs | | |
|---|---|---|
| g de support mis en oeuvre | 25 | 50 |
| Teneur en Titane (g/kg) | 4,2 | 2,5 |
| Teneur en magnésium (g/kg) | 50 | 38 |
| Dc | 80 | 80 |
| Aspect de surface | irrégulier | irrégulier |

| Résultats en polymérisation | | |
|---|---|---|
| Prod | 1390 | 1200 |
| fTri | 0,93 | 0,93 |
| PSA | 283 | 286 |
| MFI | 13 | 8,2 |

### Exemple 8

Dans un autoclave contenant 25 g de support tel que décrit aux exemples 6 et 7, on introduit successivement, à température ambiante, 434 ml d'hexane et, 20,8 ml d'une solution constituée de 12,3 % en poids de diéthylate de magnésium, 73,2 % en poids de tétra n-butylate de titane et 14,5 % en poids d'hexane.

Cette suspension étant maintenue à 35 °C, on y additionne à débit constant, pendant 2 h, 44,5 ml d'une solution à 390 g/l de dichlorure d'éthylaluminium dans l'hexane. Après la fin de l'addition, on porte la température à 60 °C et on maintient la suspension à cette température pendant 1 h supplémentaire. Le catalyseur est alors isolé, lavé et séché.

La composition du catalyseur, de couleur brune, est la suivante : Ti 5,2 % en poids, Mg 1,5 % en poids, Al 0,48 % en poids et Cl 12,5 % en poids.

Ce catalyseur est ensuite utilisé pour la polymérisation de l'éthylène en suspension dans l'hexane en présence du solide catalytique.

Dans un autoclave de 3 l, préalablement séché, on introduit sous balayage d'azote sec :
- 1 l d'hexane
- 228 mg de TEAL (sous forme d'une solution à 40 g/l dans l'hexane).

L'autoclave est isolé et le balayage à l'azote arrêté. La température est portée à 85 °C. Lorsque la température est stabilisée à 85 °C, on introduit successivement :
- de l'hydrogène sous pression partielle de 2.5 bars
- de l'éthylène sous pression partielle de 6 bars
- environ 30 mg de catalyseur par injection sous pression avec environ 100 ml d'hexane.

On maintient le réacteur à 85 °C sous agitation pendant 2 h. On récupère, à la fin de l'essai, le polymère formé qui se présente sous forme de grains de morphologie régulière.

Les résultats obtenus au cours de la polymérisation sont les suivants :

| | |
|---|---|
| Prod | 140 |
| PSA | 363 |
| MI | 1,2 |
| HLMI/MI | 31. |

### Exemple 9

Cet exemple illustre la polymérisation de polypropylène en phase gazeuse.

### Préparation du catalyseur

Dans l'autoclave contenant 25 g de support tel que décrit aux exemples 6 et 7, on introduit successivement à 30 °C, 23 ml d'EDIA, 20 ml de TiCl₄ puis, en 10 minutes, une composition (0) de formule brute Al Et_{1,75} (O Isoamyl)_{0,25} Cl obtenue comme aux exemples 1 et 2 partie (C). La température est ensuite progressivement augmentée (en 1 h) jusqu'à 100 °C et maintenue à cette valeur pendant 2 heures. La phase solide est isolée par décantation et lavée. On introduit alors, en 30 minutes et à 30 °C, 28 ml d'une solution dans l'hexane contenant, par litre, 80 g de DEAC et 176 g de 3-(3',5'-di-tert-butyl-4'-hydroxy-phényl)-propionate de n-octadécyle. La suspension est maintenue sous agitation pendant 60 min à 30 °C avant d'isoler le catalyseur qui contient 330 g/kg de TiCl₃ (Dc = 80 et VPc = 0,32).

### Polymérisation du propylène en phase gazeuse.

Dans un autoclave de 5 litres, on introduit sous balayage d'azote sec :
- 1 mmoles de TEAL (sous forme d'une solution dans l'hexane à 80 g/l)
- 0,25 mmoles de DIBDMS (sous forme d'une solution 0,1 molaire dans l'hexane)
- une quantité de solide catalytique telle que la quantité de TiCl₃ introduite soit de 80 mg environ (le rapport molaire entre le TEAL et le TiCl₃ présent dans le solide vaut environ 2)
- de l'hydrogène sous pression partielle d'environ 1 bar
- 1 litre de propylène liquide.

La suspension est agitée à 30 °C pendant 20 minutes.

On dégaze ensuite le propylène jusqu'à 12 bars tout en élevant la température jusqu'à 75 °C. On introduit alors une pression d'hydrogène égale à 1 bar et du propylène jusqu'à une pression de 25 bars. La polymérisation est effectuée dans ces conditions pendant 3 heures avant de récupérer le polymère formé se présentant sous la forme de grains de morphologie régulière. Les caractéristiques de cet essai sont :

| | |
|---|---|
| α | 3340 |
| PSA | 302 |
| fTri | 95 |
| MFI | 4,3 |

### Exemple 10

Cet exemple illustre la polymérisation de l'éthylène au moyen du catalyseur décrit à l'exemple 6.

La polymérisation est effectuée comme décrit à l'exemple 8 mais en introduisant environ 100 mg de catalyseur. Les résultats de cet essai sont :

| | |
|---|---|
| Prod = | 645 |
| PSA = | 313 |
| MI = | 3,2 |
| Dp = | 680 |
| HLMI/MI = | 27. |

### Exemple 11

Dans un autoclave de 1 l contenant 25 g de support tel que préparé aux exemples 6 et 7, on introduit successivement, à température ambiante et sous agitation, 340 ml d'hexane, 36,6 ml d'une solution contenant 132 g/l de diéthylate de magnésium et 143 g/l de tétra-n-butylate de titane dans l'hexane.

Cette suspension étant maintenue à 35 °C, on y additionne, à débit constant et pendant 2 h, 120 ml d'une solution à 127 g/l de dichlorure d'isobutylaluminium dans l'hexane. A température ambiante, la phase liquide est éliminée et le catalyseur est lavé à l'hexane et séché.

Sa composition est la suivante : Ti = 0,42 %, Mg = 1,5 %, Al = 1,1 % et Cl = 5,4 %.

Soumis à un test de polymérisation identique à celui de l'exemple 8, ce catalyseur donne les résultats suivants :

| | |
|---|---|
| Prod = | 208 |
| Dp = | 540 |
| PSA = | 276 |
| MI = | 6,0 |
| Rapport HLMI/MI = | 37 |

### Exemples 12 et 13

Ces exemples illustrent l'utilisation de catalyseur comprenant un métallocène à titre de composé (b).

### Préparation des catalyseurs

Le support est identique à celui des exemples 6 et 7.

Le catalyseur de l'exemple 12 est obtenu en introduisant successivement, dans un mélangeur rotatif, 3,6 g de support, 195 mg de dicyclopentadiényl-dichloro-zirconium et 20 ml de toluène. Ce mélange est agité pendant 15 minutes à température ambiante puis pendant 30 minutes à 45 °C et enfin pendant 40 minutes à 57 °C. Le solvant est alors éliminé sous pression réduite jusqu'à obtention d'une poudre coulante qui est séchée.

A température ambiante, la poudre est traitée par une solution contenant 617,6 mg de tétrakis-(pentafluorophényl)borate de triphénylcarbénium (BF20) dans 20 ml de toluène. Ce mélange est agité pendant 30 minutes à température ambiante avant d'éliminer le solvant par distillation sous pression réduite à 30 °C.

Le catalyseur de l'exemple 13 est obtenu en introduisant successivement, dans un mélangeur rotatif, 2,9 g de support, 511,5 mg de di-pentaméthylcyclopentadiényl-dichloro-zirconium et 20 ml de toluène. Ce mélange est agité pendant 30 minutes à température ambiante. Le solvant est ensuite éliminé à 40 °C et sous pression réduite jusqu'à obtention d'une poudre coulante qui est séchée.

A température ambiante on traite la poudre avec une solution de 1056 g de BF20 dans 20 ml de toluène. Ce mélange est agité pendant 40 minutes à température ambiante avant d'éliminer le solvant par distillation sous pression réduite à 30 °C jusqu'à obtention d'une poudre coulante et sèche.

### Polymérisation de l'éthylène

Dans un autoclave de 3 litres, préalablement séché, on introduit sous balayage d'azote sec 1 mmole de triméthylaluminium (sous forme d'une solution à 50 g/l dans l'hexane).

L'autoclave est isolé et le balayage d'azote est arrêté.

On introduit ensuite 1 litre d'isobutane et on augmente la température jusqu'à 50 °C avant d'introduire successivement :
- de l'hydrogène sous pression partielle de 0,34 bar
- de l'éthylène sous pression partielle de 10 bars
- une quantité telle que reprise dans le tableau IV du catalyseur par injection sous pression avec environ 100 ml d'isobutane.

La polymérisation est effectuée à 50 °C sous 10 bars de pression partielle d'éthylène pendant 1 heure.

Les résultats de ces essais sont repris dans le tableau IV ci-après.

**TABLEAU IV**

| Exemples | 12 | 13 |
|---|---|---|
| Quantité de catalyseur mis en oeuvre (mg) | 152 | 63 |
| P | 3080 | 1750 |
| PSA | 307 | - |
| Dp | 1000 | - |

## Revendications

1. Support de catalyseur comprenant au moins un polymère d'α-oléfine(s) se présentant sous la forme de particules de dimension moyenne de 5 à 350 µm dont le volume poreux généré par les pores de rayon de 1000 à 75000 Å est d'au moins 0,3 cm³/g susceptible d'être obtenu par polymérisation d'une ou plusieurs α-oléfines au moyen d'un système catalytique (S) contenant un composé catalytique (a) à base d'un métal de transition appartenant aux groupes IIIb, IVb, Vb et VIb du Tableau Périodique, ledit composé (a) se présentant sous la forme de particules de dimension moyenne de 2 à 200 µm, de volume poreux généré par les pores de rayon de 200 à 15000 Å d'au moins 0,02 cm³/g et étant obtenu par traitement thermique, en présence d'un agent halogéné, du matériau liquide résultant de la mise en contact de tétrachlorure de titane (TiCl₄), prétraité par un composé électrodonneur, avec une composition (D) correspondant à la formule générale
Al Rₚ (Y)_{q} X_{3-(p+q)} (II)
dans laquelle
- R représente un radical hydrocarboné;
- Y représente un groupement choisi parmi -OR', -SR' et -NR'R" dans lequel R' et R" représentent chacun un radical hydrocarboné ou un atome d'hydrogène;
- X représente un halogène;
- p est un nombre quelconque tel que 0 < p ≤ 2,5;
- q est un nombre quelconque tel que 0,5 < q < 3, la somme (p+q) étant telle que 0,5 < (p+q) ≤ 3.

2. Support selon la revendication 1, caractérisé en ce que le polymère d'α-oléfine(s) est un homo- ou un co-polymère du propylène.

3. Support selon l'une quelconque des revendications 1 et 2, caractérisé en ce que la dimension moyenne des particules est de 15 à 150 µm.

4. Support selon l'une quelconque des revendications 1 à 3, contenant, par kg, de 2 à 90 g de composé (a).

5. Procédé d'obtention d'un support de catalyseur selon l'une quelconque des revendications 1 à 4 par polymérisation d'une ou plusieurs α-oléfines au moyen d'un système catalytique (S) contenant un composé catalytique (a) à base d'un métal de transition appartenant aux groupes IIIb, IVb, Vb et VIb du Tableau Périodique, se présentant sous la forme de particules de dimension moyenne de 2 à 200 µm, de volume poreux généré par les pores de rayon de 200 à 15000 Å d'au moins 0,02 cm³/g, obtenu par traitement thermique, en présence d'un agent halogéné, du matériau liquide résultant de la mise en contact de tétrachlorure de titane (TiCl₄), prétraité par un composé électrodonneur avec une composition (D) correspondant à la formule générale
Al Rₚ (Y)_{q} X_{3-(p+q)} (II)
dans laquelle
- R représente un radical hydrocarboné;
- Y représente un groupement choisi parmi -OR', -SR' et -NR'R" dans lequel R' et R" représentent chacun un radical hydrocarboné ou un atome d'hydrogène;
- X représente un halogène;
- p est un nombre quelconque tel que 0 < p ≤ 2,5;
- q est un nombre quelconque tel que 0,5 < q < 3, la somme (p+q) étant telle que 0,5 < (p+q) ≤ 3 et un activateur choisi parmi les composés organoaluminiques.

6. Procédé selon la revendication 5, caractérisé en ce que la quantité de polymère formé varie de 5 à environ 3300 grammes par gramme de composé (a).

7. Procédé selon l'une quelconque des revendications 5 et 6, caractérisé en ce que l'agent halogéné est le TiCl₄.

8. Procédé selon la revendication 7, caractérisé en ce que la quantité totale de TiCl₄ mise en oeuvre est telle que le rapport molaire entre le titane et les radicaux R provenant de la composition (D) est supérieur à 2,7.

9. Catalyseur utilisable pour la polymérisation des α-oléfines comprenant un composé (b) contenant au moins un métal de transition appartenant aux groupes IIIb, IVb, Vb et VIb du Tableau Périodique fixé dans ou sur le support de l'une quelconque des revendications 1 à 4.

10. Catalyseur selon la revendication 9, caractérisé en ce que le composé (b) comprend au moins du titane, du magnésium et du chlore.

11. Catalyseur selon la revendication 10, dans lequel le composé (b) est choisi parmi les composés comprenant un halogénure de titane supporté sur du chlorure de magnésium et les complexes solides de chlorure de magnésium et de titane.

12. Catalyseur selon la revendication 9, caractérisé en ce que le composé (b) comprend au moins un métallocène dérivé d'un métal de transition.

13. Catalyseur selon la revendication 12, dans lequel le composé (b) contient au moins un métallocène neutre dérivé d'un métal de transition et au moins un agent ionisant, le métal dudit métallocène étant lié à au moins un atome d'halogène.

14. Catalyseur selon la revendication 9, caractérisé en ce que le composé (b) est un solide à base de trichlorure de titane complexé par un donneur d'électrons choisi parmi les composés organiques comprenant un ou plusieurs atomes ou groupements présentant une ou plusieurs paires d'électrons libres.

15. Catalyseur selon la revendication 14, obtenu par traitement thermique en présence d'un agent halogéné et des particules de support, du matériau liquide obtenu par mise en contact du TiCl₄ prétraité par un composé électrodonneur avec une composition (O) répondant à la formule générale
Al Rₘ (Y)ₙ X₃₋₍ₘ₊ₙ₎ (III)
dans laquelle
- R représente un radical hydrocarboné;
- Y représente un groupement choisi parmi -OR', -SR' et -NR'R" dans lequel R' et R" représentent chacun un radical hydrocarboné ou un atome d'hydrogène;
- X représente un halogène;
- est un nombre quelconque tel que 0 < n ≤ 0,5;
- est un nombre quelconque tel que 0 < m < 3, la somme (m+n) étant inférieure ou égale à 3.

16. Catalyseur selon la revendication 15, caractérisé en ce que l'agent halogéné est le TiCl₄.

17. Catalyseur selon la revendication 16, caractérisé en ce que la quantité totale de TiCl₄ mis en oeuvre est telle que le rapport molaire entre le titane et les radicaux R provenant de la composition (O) est inférieur ou égal à 2,7.

18. Procédé pour la polymérisation des α -oléfines au moyen d'un système catalytique (T) comprenant un catalyseur selon l'une quelconque des revendications 9 à 17 et un composé organoaluminique.

19. Procédé selon la revendication 18, appliqué à la polymérisation stéréospécifique du propylène.

20. Procédé selon la revendication 18, appliqué à la polymérisation de l'éthylène.

## Patentansprüche

1. Katalysatorträger, der wenigstens ein Polymer von α-Olefin(en) umfaßt, der in Form von Teilchen mit einer mittleren Größe von 5 bis 350 µm vorliegt, dessen Porenvolumen, das von den Poren mit einem Radius von 1000 bis 75000 Å erzeugt wird, wenigstens 0,3 cm³/g beträgt, der erhalten werden kann durch Polymerisation eines oder mehrerer α-Olefine mittels eines katalytischen Systems (S), das eine katalytische Verbindung (a) auf der Basis eines Übergangsmetalls, das den Gruppen IIIb, IVb, Vb und VIb des Periodensystems angehört, enthält, wobei besagte Verbindung (a) in Form von Teilchen mit einer mittleren Größe von 2 bis 200 um, mit einem Porenvolumen, das von den Poren mit einem Radius von 200 bis 15000 Å erzeugt wird, von wenigstens 0,02 cm³/g vorliegt und durch thermische Behandlung des flüssigen Materials, das aus dem Inkontaktbringen von Titantetrachlorid (TiCl₄), das mit einer Elektronendonorverbindung vorbehandelt ist, mit einer Zusammensetzung (D), die der allgemeinen Formel
Al Rₚ (Y)_{q} X_{3-(p + q)} (II)
entspricht, in der
- R einen Kohlenwasserstoffrest darstellt;
- Y eine Gruppe darstellt, die unter -OR', -SR' und -NR'R" ausgewählt ist, in der R' und R" jeweils einen Kohlenwasserstoffrest oder ein Wasserstoffatom darstellen;
- X ein Halogen darstellt;
- p eine solche beliebige Zahl ist, daß 0 < p ≤ 2,5;
- q eine solche beliebige Zahl ist, daß 0,5 < q < 3, wobei die Summe (p + q) so ist, daß 0,5 < (p + q) ≤ 3,
resultiert, in Gegenwart eines halogenhaltigen Mittels erhalten wird.

2. Träger gemäß Anspruch 1. dadurch gekennzeichnet, daß das Polymer von α-Olefin(en) ein Homo- oder ein Copolymer des Propylens ist.

3. Träger gemäß einem der Ansprüche 1 und 2, dadurch gekennzeichnet, daß die mittlere Größe der Teilchen 15 bis 150 µm beträgt.

4. Träger gemäß einem der Ansprüche 1 bis 3, der, pro kg, 2 bis 90 g Verbindung (a) enthält.

5. Verfahren zur Herstellung eines Katalysatorträgers gemäß einem der Ansprüche 1 bis 4 durch Polymerisation eines oder mehrerer α-Olefine mittels eines katalytischen Systems (S), das eine katalytische Verbindung (a) auf der Basis eines Übergangsmetalls, das den Gruppen Illb, IVb, Vb und Vlb des Periodensystems angehört, die in Form von Teilchen mit einer mittleren Größe von 2 bis 200 µm, mit einem Porenvolumen, das von den Poren mit einem Radius von 200 bis 15000 Å erzeugt wird, von wenigstens 0,02 cm³/g vorliegt, die durch thermische Behandlung des flüssigen Materials, das aus dem Inkontaktbringen von Titantetrachlorid (TiCl₄), das mit einer Elektronendonorverbindung vorbehandelt ist, mit einer Zusammensetzung (D), die der allgemeinen Formel
Al Rₚ (Y)_{q} X_{3-(p + q)} (II)
entspricht, in der
- R einen Kohlenwasserstoffrest darstellt;
- Y eine Gruppe darstellt, die unter -OR', -SR' und -NR'R" ausgewählt ist, in der R' und R" jeweils einen Kohlenwasserstoffrest oder ein Wasserstoffatom darstellen;
- X ein Halogen darstellt;
- p eine solche beliebige Zahl ist, daß 0 < p ≤ 2,5;
- q eine solche beliebige Zahl ist, daß 0,5 < q < 3, wobei die Summe (p + q) so ist, daß 0,5 < (p + q) ≤ 3,
resultiert, in Gegenwart eines halogenhaltigen Mittels erhalten wird, und einen Aktivator, der unter den aluminiumorganischen Verbindungen ausgewählt ist, enthält.

6. Verfahren gemäß Anspruch 5, dadurch gekennzeichnet, daß die Menge an gebildetem Polymer von 5 bis etwa 3300 Gramm pro Gramm Verbindung (a) variiert.

7. Verfahren gemäß einem der Ansprüche 5 und 6, dadurch gekennzeichnet, daß das halogenhaltige Mittel TiCl₄ ist.

8. Verfahren gemäß Anspruch 7, dadurch gekennzeichnet, daß die eingesetzte Gesamtmenge an TiC14 so ist, daß das Molverhältnis zwischen dem Titan und den Resten R, die aus der Zusammensetzung (D) stammen, größer als 2,7 ist.

9. Katalysator, der für die Polymerisation von α-Olefinen verwendbar ist, der eine Verbindung (b) umfaßt, die wenigstens ein Übergangsmetall, das den Gruppen IIIb, IVb, Vb und VIb des Periodensystems angehört, enthält, die in oder auf dem Träger aus einem der Ansprüche 1 bis 4 fixiert ist.

10. Katalysator gemäß Anspruch 9, dadurch gekennzeichnet, daß die Verbindung (b) wenigstens Titan, Magnesium und Chlor umfaßt.

11. Katalysator gemäß Anspruch 10, in dem die Verbindung (b) unter den Verbindungen, die ein auf Magnesiumchlorid trägergebundenes Titanhalogenid umfassen, und den festen Komplexen von Magnesium- und Titanchlorid ausgewählt ist.

12. Katalysator gemäß Anspruch 9, dadurch gekennzeichnet, daß die Verbindung (b) wenigstens ein Metallocen, das von einem Übergangsmetall abgeleitet ist, umfaßt.

13. Katalysator gemäß Anspruch 12, in dem die Verbindung (b) wenigstens ein neutrales Metallocen, das von einem Übergangsmetall abgeleitet ist, und wenigstens ein lonisierungsmittel enthält, wobei das Metall besagten Metallocens an wenigstens ein Halogenatom gebunden ist.

14. Katalysator gemäß Anspruch 9, dadurch gekennzeichnet, daß die Verbindung (b) ein Feststoff auf der Basis von Titantrichlorid ist, das mit einem Elektronendonor komplexiert ist, der unter den organischen Verbindungen ausgewählt ist, die ein oder mehrere Atome oder Gruppen, die ein oder mehrere freie Elektronenpaare aufweisen, umfassen.

15. Katalysator gemäß Anspruch 14, der durch thermische Behandlung des flüssigen Materials, das durch Inkontaktbringen von Titantetrachlorid, das mit einer Elektronendonorverbindung vorbehandelt ist, mit einer Zusammensetzung (O), die der allgemeinen Formel
Al Rₘ (Y)ₙ X_{3-(m + n)} (III)
entspricht, in der
- R einen Kohlenwasserstoffrest darstellt;
- Y eine Gruppe darstellt, die unter -OR', -SR' und -NR'R" ausgewählt ist, in der R' und R" jeweils einen Kohlenwasserstoffrest oder ein Wasserstoffatom darstellen; - X ein Halogen darstellt;
- n eine solche beliebige Zahl ist, daß 0 < n ≤ 0,5;
- m eine solche beliebige Zahl ist, daß 0 < m < 3, wobei die Summe (m + n) kleiner oder gleich 3 ist,
erhalten wird, in Gegenwart eines halogenhaltigen Mittels und der Teilchen des Trägers erhalten wird.

16. Katalysator gemäß Anspruch 15, dadurch gekennzeichnet, daß das halogenhaltige Mittel TiCl₄ ist.

17. Katalysator gemäß Anspruch 16, dadurch gekennzeichnet, daß die Gesamtmenge an eingesetztem TiCl₄ so ist, daß das Molverhältnis zwischen dem Titan und den Resten R, die aus der Zusammensetzung (O) stammen, kleiner oder gleich 2,7 ist.

18. Verfahren für die Polymerisation von α-Olefinen mittels eines katalytischen Systems (T), das einen Katalysator gemäß einem der Ansprüche 9 bis 17 und eine aluminiumorganische Verbindung umfaßt.

19. Verfahren gemäß Anspruch 18, angewendet auf die stereospezifische Polymerisation von Propylen.

20. Verfahren gemäß Anspruch 18, angewendet auf die Polymerisation von Ethylen.

## Claims

1. Catalyst support including at least one α-olefin polymer which is in the form of particles of mean size from 5 to 350 µm, in which the pore volume generated by the pores of radius from 1,000 to 75,000 Å is at least 0.3 cm³/g obtainable by polymerization of one or more α-olefins by means of a catalyst system (S) containing a catalytic compound (a) based on a transition metal belonging to groups IIIb, IVb, Vb and VIb of the Periodic Table, said compound (a) being in the form of particles of mean size from 2 to 200 µm, of pore volume generated by the pores of radius from 200 to 15,000 Å of at least 0.02 cm³/g and being obtained by heat treatment, in the presence of a halogen-containing agent, of the liquid material resulting from placing titanium tetrachloride (TiCl₄) pretreated with an electron-donor compound into contact with a composition (D) corresponding to the general formula
AlRₚ(Y)_{q}X_{3-(p+q)} (II)
in which
- R denotes a hydrocarbon radical;
- Y denotes a group chosen from -OR', -SR' and -NR'R" in which each of R' and R" denotes a hydrocarbon radical or a hydrogen atom;
- X denotes a halogen;
- p is any number such that 0 < p ≤ 2.5;
- q is any number such that 0.5 < q < 3, the sum (p+q) being such that 0.5 < (p+q) ≤ 3

2. Support according to Claim 1, characterized in that the α-olefin polymer is a propylene homo- or copolymer.

3. Support according to either of Claims l and 2, characterized in that the mean particle size is from 15 to 150 µm.

4. Support according to any one of claims 1 to 3, containing, per kg, from 2 to 90 g of compound (a).

5. Process for obtaining a catalyst support according to any one of claims 1 to 4, by polymerization of one or more α-olefins by means of a catalyst system (S) containing a catalytic compound (a) based on a transition metal belonging to groups IIIb, IVb, Vb and VIb of the Periodic Table being in the form of particles of mean size from 2 to 200 µm, of pore volume generated by the pores of radius from 200 to 15,000 Å of at least 0.02 cm³/g obtained by heat treatment, in the presence of a halogen-containing agent, of the liquid material resulting from placing titanium tetrachloride (TiCl₄) pretreated with an electron-donor compound into contact with a composition (D) corresponding to the general formula
AlRₚ(Y)_{q}X_{3-(p+q)} (II)
in which
- R denotes a hydrocarbon radical;
- Y denotes a group chosen from -OR', -SR' and -NR'R" in which each of R' and R" denotes a hydrocarbon radical or a hydrogen atom;
- X denotes a halogen;
- p is any number such that 0 < p ≤ 2.5;
- q is any number such that 0.5 < q < 3, the sum (p+q) being such that 0.5 <(p+q) ≤ 3
and an activator chosen from organoaluminium compounds.

6. Process according to Claim 5, characterized in that the quantity of polymer formed varies from 5 to approximately 3,300 grams per gram of compound (a).

7. Process according to any one of Claims 5 and 6, characterized in that the halogen-containing agent is TiCl₄.

8. Process according to Claim 7, characterized in that the total quantity of TiCl₄ used is such that the molar ratio of titanium to the radicals R originating from the composition (D) is higher than 2.7.

9. Catalyst usable for the polymerization of α-olefins, including a compound (b) containing at least one transition metal belonging to the groups IIIb, IVb, Vb and VIb of the Periodic Table bound in or on the support of any one of Claims 1 to 4.

10. Catalyst according to Claim 9, characterized in that the compound (b) contains at least titanium, magnesium and chlorine.

11. Catalyst according to Claim 10, wherein the compound (b) is chosen from compounds containing a titanium halide supported on magnesium chloride and solid complexes of titanium and magnesium chloride.

12. Catalyst according to Claim 9, characterized in that the compound (b) contains at least one metallocene derived from a transition metal.

13. Catalyst according to Claim 12, characterized in that the compound (b) contains at least one neutral metallocene derived from a transition metal and at least one ionizing agent, the metal of the said metallocene being bonded to at least one halogen atom.

14. Catalyst according to Claim 9, characterized in that the compound (b) is a solid based on titanium trichloride complexed with an electron-donor chosen from organic compounds containing one or more atoms or groups which have one or a number of free electron pairs.

15. Catalyst according to Claim 14, obtained by heat treatment, in the presence of a halogen-containing agent and of the support particles, of the liquid material obtained by placing TiCl₄ pretreated with an electron-donor compound in contact with a composition (O) corresponding to the general formula
AlRₘ(Y)ₙX₃₋₍ₘ₊ₙ₎ (III)
in which
- R denotes a hydrocarbon radical;
- Y denotes a group chosen from -OR', -SR' and -NR'R" in which each of R' and R" denote a hydrocarbon radical or a hydrogen atom;
- X denotes a halogen;
- n is any number such that 0 < n ≤ 0.5;
- m is any number such that 0 < m < 3, the sum (m+n) being less than or equal to 3.

16. Catalyst according to Claim 15, characterized in that the halogen-containing agent is TiCl₄.

17. Catalyst according to Claim 16, characterized in that the total quantity of TiCl₄ used is such that the molar ratio of the titanium to the radicals R originating from the composition (O) is lower than or equal to 2.7.

18. Process for the polymerization of α-olefins by means of a catalyst system (T) including a catalyst according to any one of Claims 9 to 17 and an organoaluminium compound.

19. Process according to Claim 18, applied to the stereospecific polymerization of propylene.

20. Process according to Claim 18, applied to the polymerization of ethylene.
